**Europäisches Patentamt**

**European Patent Office**

**Office européen des brevets**

(19)

(11) Veröffentlichungsnummer: **0 307 441 B1**

(12) # EUROPÄISCHE PATENTSCHRIFT

(45) Veröffentlichungstag der Patentschrift:
**13.11.91 Patentblatt 91/46**

(51) Int. Cl.⁵: **A01D 43/06, A01D 90/02**

(21) Anmeldenummer: **88902845.2**

(22) Anmeldetag: **26.03.88**

(86) Internationale Anmeldenummer:
**PCT/EP88/00258**

(87) Internationale Veröffentlichungsnummer:
**WO 88/07319 06.10.88 Gazette 88/22**

(54) **MÄHLADEGERÄT.**

(30) Priorität: **26.03.87 AT 730/87**

(43) Veröffentlichungstag der Anmeldung:
**22.03.89 Patentblatt 89/12**

(45) Bekanntmachung des Hinweises auf die
Patenterteilung:
**13.11.91 Patentblatt 91/46**

(84) Benannte Vertragsstaaten:
**BE CH DE FR GB IT LI LU NL**

(56) Entgegenhaltungen:
**CH-A- 399 049**
**CH-A- 417 208**
**DE-A- 1 806 666**
**DE-A- 3 103 975**

(56) Entgegenhaltungen:
**DE-A- 3 442 831**
**DE-B- 1 226 353**
**FR-A- 2 006 505**
**FR-A- 2 038 993**

(73) Patentinhaber: **DALLINGER, Josef**
**Obeltsham 1**
**A-4673 Gaspoltshofen (AT)**

(72) Erfinder: **Dallinger, Josef**
**Obeltsham 1**
**A-4673 Gaspoltshofen (AT)**
Erfinder: **Höftberger, Franz**
**Kropling 3**
**A-4901 Ottnang (AT)**

(74) Vertreter: **Puschmann, Heinz H., Dipl.-Ing.(FH)**
**Sendlinger Strasse 35**
**W-8000 München 2 (DE)**

**Beschreibung**

Die Erfindung betrifft ein Mähladegerät zum Betreiben mit einem landwirtschaftlichen Zugfahrzeug, mit einem an einem Rahmen angeordneten Laderaum mit im wesentlichen starren Wänden, mit einem Mähwerk am unteren Ende eines zum Laderaum ansteigenden Förderkanals mit einer Beladevorrichtung zwecks Aufnahme des gemähten Erntegutes und Förderung in den Laderaum, mit einer dem Laderaumboden zugeordneten, zum Entladen des Erntegutes durch eine mittels eines Gatters verschließbare Entladeöffnung dienenden Entladevorrichtung und mit wenigstens einer Antriebsvorrichtung zum Antreiben des Mähwerkes sowie der Belade- und Entladevorrichtung vom Zugfahrzeug aus, wobei die Beladevorrichtung erste und zweite Förderorgane umfaßt, von denen die ersten Förderorgane das Erntegut unmittelbar vom Mähwerk und die zweiten Förderorgane den Weitertransport des Erntegutes in den Laderaum bewirken.

Bei Mähladegeräten dieser Art ist der Laderaum ein von dem Zugfahrzeug gezogener, mit einem sogenannten Rollboden versehener Selbstladewagen, dem das Mähwerk und die mit den Förderorganen versehene Hochfördervorrichtung für das gemähte Halmgut zugeordnet ist; vgl. DE-OS 21 11 164.

Eine solche Ausbildung ist aufwendig und schwer. Da die Fördertrommel hinter dem als Kreiselmäher ausgebildeten Mähwerk angeordnet ist und bei ihrem Antrieb Saugwind erzeugt, kann das Aufnehmen des Mähgutes unmittelbar oberhalb des Kreiselmähwerkes erfolgen, das quer zur Wagenlängsachse und in Fahrtrichtung vor der Fördertrommel angeordnet ist. Zwar wird hierbei vermieden, daß abgemähtes Halmgut auf den Boden fällt, jedoch werden unerwünschte - zum Beispiel von unvermeidlichen Maulwurfshaufen stammende - Fremdbestandteile von der Fördertrommel mit aufgenommen und über die nachgeordnete als Förderschwinge ausgebildete Fördervorrichtung in den Laderaum des Selbstladewagens überführt. Ein weiterer Nachteil ist der erheblich vergrößerte Leistungsbedarf, da sowohl das Mähwerk als auch die erste und zweite Fördervorrichtung sowie der Rollboden des Selbstladewagens anzutreiben sind, was die Verwendung eines leistungsstarken und damit schweren Schleppers notwendig macht. Ein solches Gespann ist im schwierigen Gelände nicht einsetzbar.

Es ist ferner bekannt, einem von einem Schlepper gezogenen Ladewagen ein Mähwerk, ebenfalls in Form eines Kreiselmähers, zuzuordnen und das von dem Kreiselmäher geschnittene Mähgut über eine Pick-up-Walze einem nachgeschalteten Rechenkettenförderer zuzuführen, mittels dem das geschnittene Mähgut dann dem oberen Bereich des Laderaumes zugeführt wird, während das Entladen des Erntegutes über einen dem Laderaum des Ladewagens zugeordneten Kratzboden erfolgt; vgl. DE-GM 80 02 234.

Eine solche Anordnung ist gleichfalls aufwendig, da außer einer Fördervorrichtung eine Aufsammeltrommel und ein Kratzboden vorgesehen sein müssen. Dies wirkt sich gleichfalls nachteilig auf das Gewicht der Gesamtanordnung aus, was unter Berücksichtigung des vorgesehenen Deichselzuges auch für die Geländegängigkeit ungünstig ist, da die Stabilität eines solchen Gespannes unzureichend ist. Schwieriges Gelände ist daher ebenfalls nicht befahrbar.

Infolge des Gewichtes solcher Anordnungen und ihres hohen Leistungsbedarfes ist die Verwendung eines leichten Schleppers ausgeschlossen, obgleich leichte Schlepper gerade bei schwierigen Geländeverhältnissen erhebliche Vorteile aufweisen. Auch ist mit einer Selbstladewagen-Anordnung das Abladen zur Futtervorlage, insbesondere bei beengten Platzverhältnissen, schwierig. Schließlich wird durch die Anordnung von Kreiselmäher und Fördertrommel bzw. Pick-up-Walze als Aufnehmer das Mähgut zerschlagen und völlig ungeordnet in den Laderaum gebracht, was zu niedrigem spezifischen Ladegewicht führt und insbesondere die Futterqualität in hohem Maße ungünstig beeinflußt.

Um die Nachteile des Deichselzuges zu vermeiden, ist es bekannt, einen selbstfahrenden, mit einem Kratzboden versehenen Ladewagen stirnseitig mit einem höhenverstellbaren Anbauaggregat zu versehen, das aus einem Fingerbalken-Mähwerk und einer nachgeschalteten, stetig arbeitenden Fördereinrichtung sowie einer zugeordneten Haspel besteht, die oberhalb des Mähwerkes zwecks Abführung des geschnittenen Erntegutes in die Fördereinrichtung besteht; vgl. DE-OS 18 06 666.

Auch diese Anordnung baut schwer. Zusätzlich wird dort eine Zwischenfördereinrichtung für das Überführen des Mähgutes von der vorgerannten Fördereinrichtung in den Laderaum benötigt, was nicht nur aufwendig ist, sondern auch zu Störungen Anlaß gibt. Insbesondere aber wird der Vorteil der Haspel hinsichtlich einer geordneten Überführung des Mähgutes in die nachgeschaltete Fördereinrichtung durch die Zwischenfördereinrichtung wieder zunichte gemacht.

Für das tägliche Holen von frischem Grünfutter, insbesondere unter Berücksichtigung des Befahrens von schwierigem Gelände, besteht daher der Bedarf an einem zuverlässig arbeitenden, zwecks Erzielung eines hohen spezifischen Ladegewichtes das Mähgut möglichst geordnet abgebenden, geländegängigen Mähladegerätes, das bei geringem Gewicht leicht zu bedienen ist und unter Verwendung möglichst weniger Bauteile die Form eines zum Beispiel aus der DE 34 42 831-A1 als Aufsammelvorrichtung bekannten Anbaugerätes besitzt.

Der Erfindung liegt daher die Aufgabe zugrunde, ein als Anbaugerät ausgebildetes Mähladegerät für das tägliche Holen von frischem Grünfutter zu schaffen, das sich durch einfachen Aufbau, mit wenigen angetriebenen Bauteilen, geringen Leistungsbedarf, geringes Eigengewicht bei hohem spezifischen Ladegewicht, leichte Manövrierbarkeit auch bei schwierigem Gelände und geringer Neigung zur Futterverschmutzung auszeichnet und bei dem Ein- und Ausbringen des Mähgutes in und aus dem Ladebehälter verbessert ist.

Ausgehend von einer Anordnung gemäß der eingangs genannten Art ist diese Aufgabe erfindungsgemäß dadurch gelöst, daß die Be- und Entladevorrichtungen eine die ersten und zweiten Förderorgane umfassende sowie dritte Förderorgane aufweisende Fördereinrichtung bilden, die, in Arbeitsrichtung gesehen, oberhalb des Mähwerkes bis hinter die Mähwerkzeuge hinausreichend und in Arbeitsrichtung ansteigend den Förderkanal von seinem unteren Ende aus bis zum Laderaum und den Laderaumboden im wesentlichen überstreicht.

Weitere Merkmale der Erfindung ergeben sich aus den Unteransprüchen.

Durch die erfindungsgemäße Ausbildung und Anordnung einer einzigen Vorrichtung für das Heranführen des Erntegutes an das Mähwerk, für die Aufnahme des Erntegutes nach dem Mähen unmittelbar vom Mähwerk, also für das geordnete Aufsammeln. das Fördern in den Laderaum, also für das geordnete Laden und schließlich für das Entladen des Erntegutes durch die Entladeöffnung, ergibt sich eine wesentliche Vereinfachung und Leistungsverbesserung des gattungsbildenden Mähladegerätes bei gleichzeitiger Gewichtsverringerung, so daß dieses als Anbaugerät für einen leichten Schlepper zum Einsatz selbst in schwierigem Gelände geeignet wird. Zwar ist hierbei eine geschobene Betriebsweise - Rückwährtsfahrt des Zugfahrzeuges - notwendig, jedoch wird dadurch eine schonende Ernte ohne Überfahren des Erntegutes sowie eine gute Manövrierbarkeit des Mähladegerätes ermöglicht.

Die Fördereinrichtung des Mähladegerätes wird also auch für das Entladen durch die gegenüber dem Förderkanal angeordnete Entladeöffnung des Laderaumes benutzt, hierbei ist die ansteigende Anordnung der Fördervorrichtung und dementsprechend die des Bodens des Laderaumes vorteilhaft, da durch diese ein dosiertes und gelockertes Abladen des geladenen Erntegutes unterstützt wird. Da ferner für das Be- und Entladen die Förderrichtung der Fördervorrichtung beibehalten wird, entfallen besondere Antriebe oder Umschaltvorrichtungen hierfür.

Die erfindungsgemäße Anordnung und Ausbildung der Fördereinrichtung erfordert zwar gesteuerte zwangsgeführte Förderorgane, doch sind die geforderten Förderbewegungen der Förderorgane auf mechanisch besonders einfache Weise durch die Anwendung von Schubkurbel-, Kurbelstangen- oder Schubstangengetrieben erzielbar, die auch unter schwierigen Einsatzverhältnissen über lange Betriebszeiten zuverlässig und betriebssicher arbeiten.

Ist der Boden des Laderaumes verschwenkbar zwischen einer verriegelbaren hochgestellten Beladestellung und einer verriegelbaren herabgeschwenkten Entladestellung ausgebildet, in der die entsprechenden Förderorgane der Fördervorrichtung in den Laderaum eingreifen, so kann der Entladevorgang ohne die Förderorgane umschalten zu müssen, verblüffend einfachdurchgeführt werden.

Die für den Betrieb des Mähladegerätes notwendigen, zwecks Gleichlauf der einzelnen Förderorgane über die Breite des Mähwerkes vorzugsweise beidseitig zur Fördervorrichtung vorgesehenen Antriebe bzw. Antriebsverbindungen sind üblicher Bauart und hier der besseren Übersicht halber nicht näher dargestellt.

Die Erfindung ist nachstehend anhand der Zeichnung einiger Ausführungsbeispiele beschrieben.

Im einzelnen zeigen:

Figur 1 eine schematische Seitenansicht eines Mähladegerätes gemäß der Erfindung, angebaut an einen Schlepper,

Figur 2 eine teilweise geschnittene schematische Draufsicht auf das Mähladegerät,

Figur 3 eine schematische Teilansicht des Mähladegerätes nach den Figuren 1 und 2 in Seitenansicht mit einem Schubstangenförderer als Fördervorrichtung, teilweise im Längsschnitt,

Figur 4 einen schematischen Ausschnitt des Mähladegerätes mit einem Schubkurbelförderer als Fördervorrichtung, in Seitenansicht,

Figur 5 einen schematischen Ausschnitt des Mähladegerätes mit einem Kurbelstangenförderer als Fördervorrichtung, in Seitenansicht,

Figur 6 einen Teilausschnitt aus dem Mähladegerät nach Figur 5 gemäß dem Schnitt A-A,

Figur 7 einen schematischen Ausschnitt des Mähladegerätes mit einem Kurbelstangenförderer mit starrer Förderkanalwand am Mähwerk in Seitenansicht, im Längsschnitt,

Figur 7a eine Ansicht A eines nach oben gerichteten Förderzinken gemäß der Anordnung nach Figur 7,

Figur 8 einen schematischen Ausschnitt des Mähladegerätes mit einem Kurbelstangenförderer mit schwenkbarer Förderkanalwand am Mähwerk in Seitenansicht, im Längsschnitt,

Figur 8a eine Ansicht in Richtung des Pfeiles B des unteren Teils der Förderkanalwand, des Mähwerkes und des Spaltes der Anordnung nach Figur 8,

Figur 9 eine schematische Draufsicht auf das Mähladegerät mit einem Kurbelstangenförderer nach Figur 8, telweise geschnitten,

Figur 10 eine Seitenansicht des Rahmens des Mähladegerätes nach Figur 9 als Antriebsschema,

Figur 11 eine schematische Draufsicht auf einen Zwischenrahmen für das Mähladegerät nach Figur 1 und

Figur 12 eine schematische Draufsicht auf die Stirnseite des Mähladegerätes nach Figur 1 mit einer Dreipunktanbauvorrichtung und einem Stützrad.

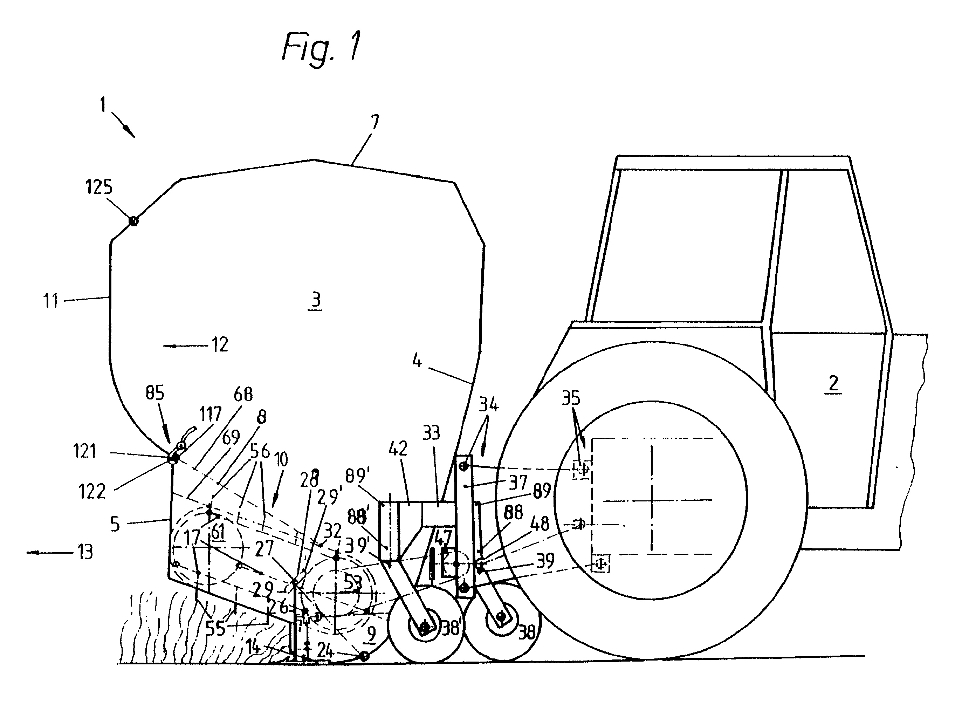

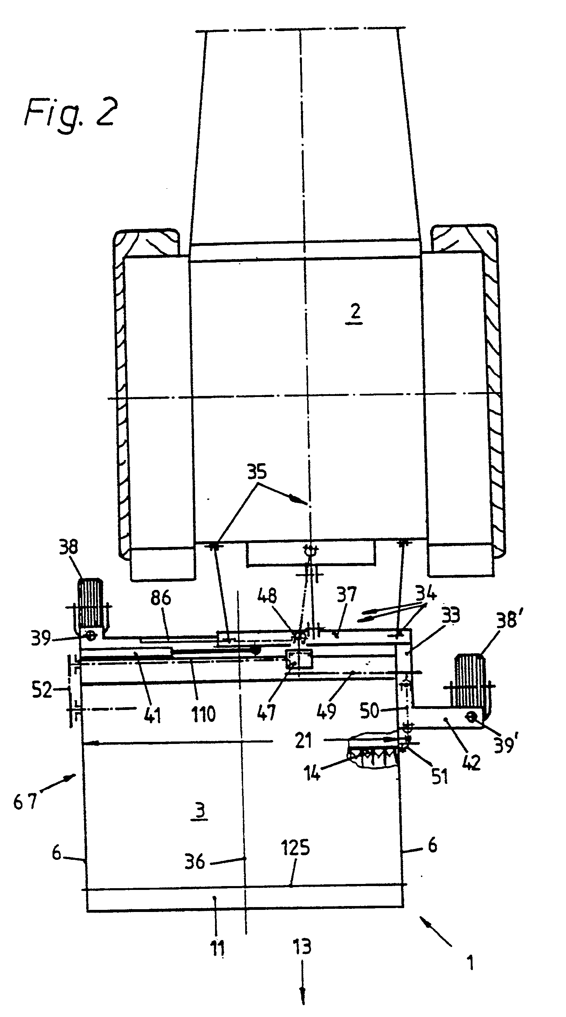

Das in den Fig.1 und Fig.2 dargestellte Mähladegerät 1 besitzt einen Rahmen 33, mit einer Dreipunktanbauvorrichtung 34, die an die Dreipunktanhängung 35 eines Schleppers 2 gekoppelt ist.

Die Dreipunktanbauvorrichtung 34 ist auf einem Zwischenrahmen 37 angebracht, der in einer Verschiebebahn 86 senkrecht zur Längsmittelachse 36 des Mähladegerätes 1 zwischen einer symmetrischen und einer seitlich verschobenen Lage des Zwischenrahmens 37 mit einem hydraulischen Versetlimittel 41, das sich am Rahmen 33 abstützt, verschiebbar gelagert ist.

Der Rahmen 33 trägt einen Laderaum 3, der von Seitenwänden 6, einer oberen Laderaumwand 7, einer förderkanalseitigen Stirnwand 4 und einer gegenüberliegenden Stirnwand 5, sowie einem Laderaumboden 8 gebildet wird

Die gegenüberliegende Stirnwand 5 ist mit einer Entladeöffnung 12 versehen, die von einem Gatter 11 verschlossen ist, das an der oberen Laderaumwand 7 an einer waagerechten Schwenkachse 125 hochschwenkbar gelagert ist und an seinem unteren Ende mit dem Laderaumböden 8 über eine Riegemvorrichtung 85 verriegelbar ist.

Am anderen Ende des Laderaumbodens 8 mündet ein Förderkanal 9 in den Laderäum 3, der von einem auf dem Boden geführten Mähwerk 14 ausgehend nach oben verläuft.

Das Mähwerk 14 weist eine Arbeitsrichtung 13 auf, die von der Dreipunktanbauvorrichtung 34 weggerichtet ist. Es ist am unteren Ende 65 des Förderkanals 9 an der unteren Förderkanalwand 25 um eine waagerechte Schwenkachse 24, die senkrecht auf die Längsmittelachse 36 des Laderaumes 3 angeordnet ist, höhenverschwenkbar angelenkt.

Zwischen dem Mähwerk 14 und der Schwenkachse 24 ist ein unterer Teil 79 der unteren Förderkanalwand 25 gemeinsam mit dem Mähwerk 14 verschwenkbar angebracht, wodurch die Bodenfreiheit des Gerätes 1 verbessert wird.

An dem als Fingerbalkenmähwerk ausgebildeten Mähwerk 14 sind beiderseits Streben 26 angebracht, die seitlich am Rahmen 33 nach oben reichen und mit Führungsteilen 27 in Bahnen 28 die am Rahmen 33 angebracht sind, zwischen Anschlägen 29,29' geführt sind.

Eine Födervorrichtung 10 erstreckt sich oberhalb des Mähwerkes 14 in Arbeitsrichtung 13 des Gerätes 1, vom Förderkanal 9 über die Mähwerkzeuge 16 des Mähwerkes 14 hinaus schräg nach oben ansteigend bis zur gegenüberliegenden Stirnwand 5 des Laderaumes 3 und reicht mit ihrer Oberseite bis unmittelbar an den Laderaumboden 8, wobei sie sich über die gesamte Föderkanalbreite 21 erstreckt und mit ihrem förderkanalseitigen Ende 66 unmittelbar an den Förderkanal 9 heranreicht, durch dessen Förderkanalvorderwand 87 ihre Förderwerkzeuge 15 in den Förderkanal 9 hineinragen.

Die Fördervorrichtung 10 ist mit nach unten gerichteten Förderzinken 55 versehen, die das Ernetgut an das Mähwerk heranführen und nach dem Abmähen in den Förderkanal 9 schieben und besitzt Förderzinken 54, die im Förderkanal 9 angeordnet sind und das Erntegut durch diesen in den Laderaum befördern.

Die Fördervorrichtung 10 ist mit nach oben gerichteten Förderzinken 56 ausgestattet die durch Öffnungen 31 im Laderaumboden 8 hindruchragen, wenn sich dieser in einer herabgeschwenkentm Stellung 69 befindet, in der das Gatter 11 entriegelt und die Entladeöffnung 12 frei für das Entladen ist.

In der hochgeschwenkten Stellung 68 des Laderaumbodens 8 ragen die Förderzinken 56 nicht in den Laderaum 3 oder nur die im Bereich des Förderkanals 9 befindlichen und nach oben gerichteten Förderzinken 59 ragen in den Laderaum 3, wo sie während des Beladens für eine gleichmäßige Verteilung des Erntegutes sorgen.

Der laderaumboden 8 besteht aus Abstreifern 115, die ein U-Profil aufweisen, in der Laufrichtung 30 der Fördervorrichtung 10 verlaufend angeordnet sind und zwischen sich Längsspalten 124 für die Förderzinken 56 frei lassen.

Die Abstreifer 115 sind gemeinsam um eine waagerechte, senkrecht zur Längsmittelachse 36 des Laderaumes 3 verlaufende Schwenkachse 32 im Bereich des förderkanalseitigen Endes 66 der Fördervorrichtung 10 zwischen der hochgeschwenkten Stellung 68 und der herabgeschwenkten Stellung 69 verschwenkbar gelagert und anderenends mit einem Querträger 117 zu einem einstrückigen Laderaumboden 8 verbunden.

Der Querträger 117 trägt beiderseits Riegelzapfen 122 der Riegelvorrichtung 85 des Gatters 11, deren Riegelhaken 121 mit dem Riegelzapfen 122 verriegelt wird.

Der Antrieb von Mähwerk 14 une Dördervorrichtung 10 erfolgt über einen Gelenkwellenanschluß 48 eines, im Bereich der Dreipunktanbauvorrichtung 34 au dem Rahmen 33 angebrachten Hauptgeriebes 47, vom Schlepper 2 her.

Vom Hauptgetriebe 47 verzweigt der Antrieb zu einem Verlagerungsgetriebe 49 nach unten und an eine Seite des Rahmens 33 und von dort über eine Gelekwelle 50 auf den Mähwerkantrieb 51, sowie über eine Zwischenwelle 110 zur gegenüberleigenden Seite des Rahmens 33 und von dort über ein Zwischengetriebe 52 an das, dem Hauptgetriebe 47 zugewandte Ende 53 der Fördervorrichtung 10, gleichzeitig das föderkanalseitige Ende 66 der Fördervorrichtung bildet.

Bei dem in Fig.1 und Fig.2 wiedergegebenen Ausführungsbeispiel ist das Mähladegerät 1 von zwei Stützrädern 38. 38' an beiden Seiten des Rahmens 33 im Bereich des Förderkanals 9 abgestützt, die mit lotrechten Nachlaufachsen 39, 39' in, am Rahmen 33, in Arbeitsrichtung 13 des Gerätes 1 gesehen, vor dem Förderkanal 9 befestigten Achslagern 88, 88' gelagert sind. Mit den Achslagern 88, 88' zusammen eingebaut sind hydraulische Verstellmittel 89, 89' die nicht näher dargestellt sind und die eine zentrale Verstellung der Stutzräder 38, 38' ermöglichen.

Das an der nach außen versetzten Seite des Rahmens 33 angeordnete Stützrad 38 läuft innerhalb der seitlichen Begrenzung des Gerätes 1. Das an der nach innen versetzten Rahmenseite des Gerätes 1 angeordnete Stützrad 38 ist an einem Ausleger 42 des Rahmens 33 gelagert und läuft bei geschobener Betriebsweise, d.h. bei Rückwärtsfahrt des Schleppers 2, in dessen Spur voraus.

Bei Transport des Gerätes 1 oder bei gezogener Arbeitsweise läuft des Stützrad 38' in der Spur des Schleppers 2 nach.

In Fig.2 ist der Laderaum 3 ein Stück aufgerissen dargestellt, um Lage und Arbeitsrichtung 13 des Mähwerkes zu zeigen.

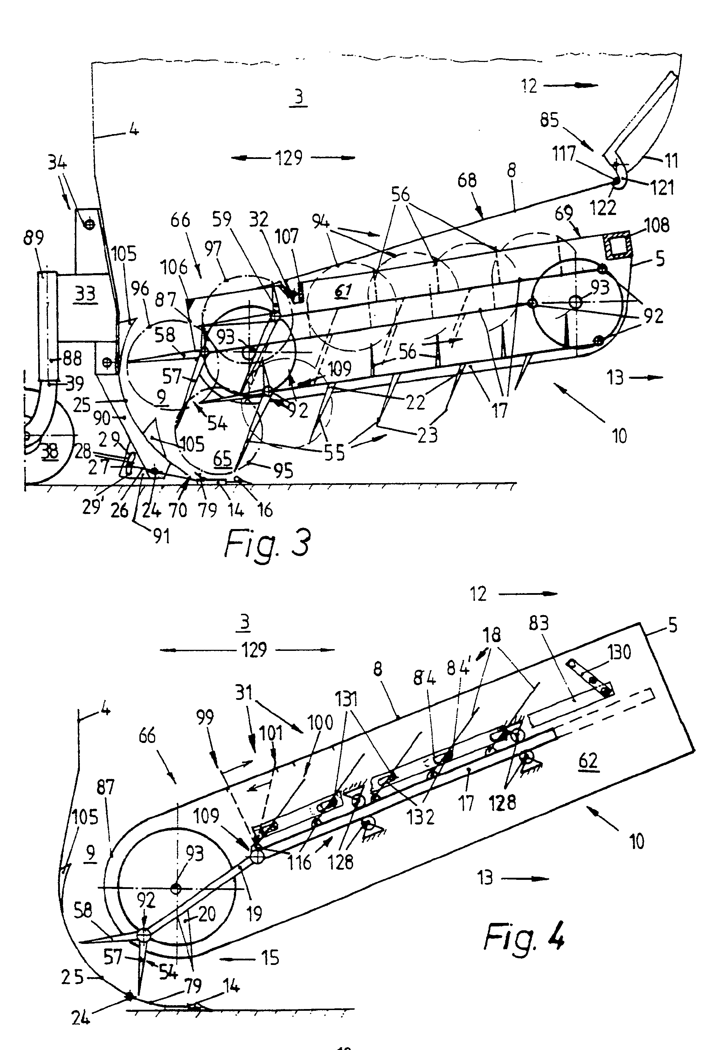

Der untere Teil des Mähladegerätes 1 ist in Fig.3 näher dargestellt und zeigt eine Fördervorrichtung 10 als Schubstangenförderer 61 mit drei, gegeneinander um 120 Winkelgrade versetzte Gruppen von Schubstangen 17, die an Kurbeln 92 gelagert sind, die ihrerseits mit Kurbelwellen 93 beiderseits im Rahmen 33 gelagert sind, wobei der Schubstangenförderer 61 in Arbeitsrichtung 13, vom förderkanalseitigen Ende 66, das gleichzeitig auch das Ende bildet, welches dem Hauptgetriebe 47 zugewandt ist, aus zur Entladeöffnung 12 hin, leicht schräg ansteigend angeordnet ist, so daß Freiraum für das noch auf dem Halm stehende Erntegut geschaffen ist.

Der Schubstangenförderer 61 ist an seiner Oberseite mit Querträgen 106, 107, 108, die sich über die Förderkanalbreite 21 erstrecken, verstärkt, wobei ein vorderer Querträger 106 am förderkanalseitigen Ende 66 des Schubstangenförderers 61 im Bereich der Einmündung des Förderkanals 9 in den Laderaum 3 angeordnet ist.

Ein mittlerer Querträger 107 ist im Bereich des Laderaums 3 hinter einer ersten Reihe von nach oben gerichteten Förderzinken 59 angeordnet und ein hinterer Querträger 108 ist im Bereich der Entladeöffnung 12 angeordnet.

Der vordere Querträger 106 stützt gleichzeitig die Abstreifer 77, die am förderkanalseitigen Ende 66 des Schubstangenförderers 61 die Förderkanalvorderwand 87 des Förderkanals 9 bilden und den förderkanalseitigen Teil des Laderaumbodens 8.

Die Förderwerkzeuge 15 der Schubstangen 17 des Schubstangenförderers 61 bestehen aus nach unten gerichteten Förderzinken 55, die an den Schubstangen 17 befestigt sind und von ihren Wurzeln 22 zu ihren Spitzen 23 gegen die Arbeitsrichtung 13 des Mähladegerätes 1 ausgerichtet sind.

Gleichzeitig nimmt die Länge der Förderzinken 55 gegen die Arbeitsrichtung 13 des Gerätes 1 auf das Mähwerk 14 hin zu, so daß die Förderzinken 55 das noch auf dem Halm stehende Erntegut mit steigender Wirksamkeit dem Mähwerk 14 und damit dem unteren Ende 65 des Förderkanals 9 zuführen.

Nach dem Abmähen des Erntegutes durch die Mähwerkzeuge 16 des Mähwerkes 14 übernehmen, die am föderkanalseitigen Ende 109 der Schubstangen 17 angebrachten Förderzinken 57, 58, die zwischen den Abstreigern 77 der Förderkanalvorderwand 87 auf Förderkanaltiefe 74 hindurchgreifen, den Transport des Erntegutes durch den Förderkanal 9 in den Laderaum 3.

Von diesen weisen die ersten Förderzinken 57 die größe Länge auf, sind nach unten gerichtet und gleich ausgerichtet wie die Förderzinken 55.

Die zweiten Förderzinken 58 sind nahezu waagerecht ausgerichtet, mit den Spitzen schwach nach unten geneigt, während die dritten Förderzinken 59 ebenso nach oben gerichtet und gegen die Arbeitsrichtung 13 des Gerätes 1 ausgerichtet sind, wie die nach oben gerichteten Förderzinken 56, die auf den Schubstangen 17 verteilt angebracht sind.

An der Oberseite des Schubstangenförderers 61 befindet sich der Laderaumboden 8, dessen förderkanalseitiger Teil mit Öffnungen 31 für die Förderzinken 59 versehen ist.

Der daran anschließende Laderaumboden 8 besteht aud den bereits beschriebenen, in Abständen angeordneten Abstreifern 115, deren Schwenkachse 32 am mittleren Querträger 107 angeordnet ist.

Durch die von den Abstreifern 115 gebildeten Längsspalten 124 greifen die nach oben gerichteten Förderzinken 56, während der herabgeschwenkten Stellung 69 des Laderaumbodens 8 über einen Teil ihrer Länge in den Laderaum 3, wogegen sie während der hochgeschwenkten Stellung 69 desselben nicht eingreifen können.

Die dritten Förderzinken 59 greifen hingegen ständig in den Laderaum 3 ein und sorgen für die stetige und gleichmäßige Beladung.

Die Steigung des laderaumboden 8 in Richtung auf die Entladeöffnung 12 zu verbessert das dosierte Abladen durch die Förderzinken 56.

Das Mähwerk 14 ist, in Arbeitsrichtung 13 des Mähladegerätes 1 gesehen, vor den Mähwerkzeugen 16 an Verstärkungsprofilen 90 der unteren Förderkanalwand 25 um die Schwenkachse 24 verschwenkbar gelagert, zusammen mit dem unteren Teil 79 der unteren Förderkanalwand 25, der unmittelbar an das Mähwerk 14 anschließt.

Das Mähwerk 14 ist mit einer Strebe 26 versehen, deren Führungsteil 27 zwischen den Anschlägen 29,29 in der Bahn 28, die auf einem Stützprofil 91 angebracht ist, bewegbar ist.

An der Innenseite der unteren Förderkanalwand 25 sind in Abständen voneinander zwei Reihen von Rückkante eingezetzt, die das Zurückrutschen des Erntegutes zwischen den Förderhüben der Schubstangen 17 verhindern.

Zwischen dem, mit dem Mähwerk 14 verbundenen, unteren Teil 79 der unteren Förderkanalwand 25 und der daran anschliessenden unteren Förderkanalwand 25 ist ein Spalt 70 freigelassen, von einer Breite 71, die Erde und Steinen den Durchtritt gestattet, nicht aber dem Erntegut und der dadurch gebildet ist, daß der dem Mähwerk 14 zugewandte Rand 72 des Spaltes 70, in Richtung der Förderkanaltiefe 74, über die gesamte Föderkanalbreite 21 versetzt ist.

In Fig.4 ist der untere Teil des Mähladegerätes 1 mit einem Schubkurbelförderer 62 dargestellt, bei dem im Unterschied zum vorhergehenden Ausführungsbeispiel der Laderaumboden 8 fest, unverschwenkbar angebracht ist.

Die Schubstangen 17 sind über die Förderkanalbreite 21 verteilt angeordnet, zwischen Rollen 128 hin- und herbewegbar gelagert.

Die förderkanalseitigen Enden 109 der Schubstangen 17 sind mit Kurbelstangen 19 gekoppelt, die an Kurbeln 92 angelenkt sind, die mit einer Kurbelwelle 93 verbunden sind, die beiderseits im Rahmen 33 gelagert ist.

Die Kurbelstangen 19 tragen zusätzliche Förderwerkzeuge 20 in Form von nach unten gerichteten Förderzinken und an ihren kurbelseitigen Enden erste une zweite Förderzinken 57, 58 mit der gleichen Ausrichtung wie im vorbeschriebenen Fall des Schubstangenförderers 61.

Die Schubstangen 17 tragen nach oben gerichtete, schwenkbare Förderzinken 18, die in Längsichtung 129 des Gerätes 1 zwischen einer abgesenkten Lage 100, die dargestellt ist, in der die Förderzinken 18 nicht in den Laderaum 3 hineigreifen und einer aufrechten Lage 99, die angedeutet ist, in der die Förderzinken 18 senkrecht zum Laderaumboden 8 ausgerichtet in den Laderaum 3 ragen, verschwenkbar gelagert sind.

Zum gemeinsamen Verschwenken sind die Förderzinken 18 an Querwellen 116 befestigt, die an den Schubstangen 17 verdrehbar gelagert sind. Bei einer der äußeren Längsreihen der Förderzinken 18 sind diese mit einem in längsrichtung 129 des Mähladegerätes 1 bewegbaren Verstellgestänge 83 über Anlenkungen 131 verbunden, wie in Fig.4 dargestellt, und mittels eines, angedeutet wiedergegebenen, Verstellhebels 130 verstellbar.

Für das Entladen des Erntegutes werden die Föderzinken 18 mit dem Verstellgestänge 83 in die aufrechte Lage 99 geschwenkt, aus der sie während sich die Schubstangen 17 in Richfung Förderkanal 8 bewegen, durch Verschieben der Anlenkungen 131 in Bähnen 132 zwischen Anschlägen 84 uni 84', die auf dem Verstellgestänge 83 angebracht sind, in eine zurückgezogene Lage 101 gelangen, in der sie nur über einen geringen Teil ihrer Länge durch die Öffnungen 31 des Laderaumbodens 8 in den Laderaum 3 ragen.

Sobald sich die Schubstangen 17 wieder in Richtung Entladeöffnung 12 bewegen, richten sich die Förderzinken 18 durch den Widerstand des auflagernden Erntegutes auf und fördern dieses zur Entladeöffnung 12.

Die Anordnung der Förderzinken 57, 58. 59 und 56 oder 18 ist bei der Fördervorrichtung 10 so gewählt, daß sich die Bahnen 95, 96, 97 und 94 oder 98, von in Förderrichtung 82 benachbarten Förderzinken 57, 58, 59 und 56 überschneiden bzw. berühren.

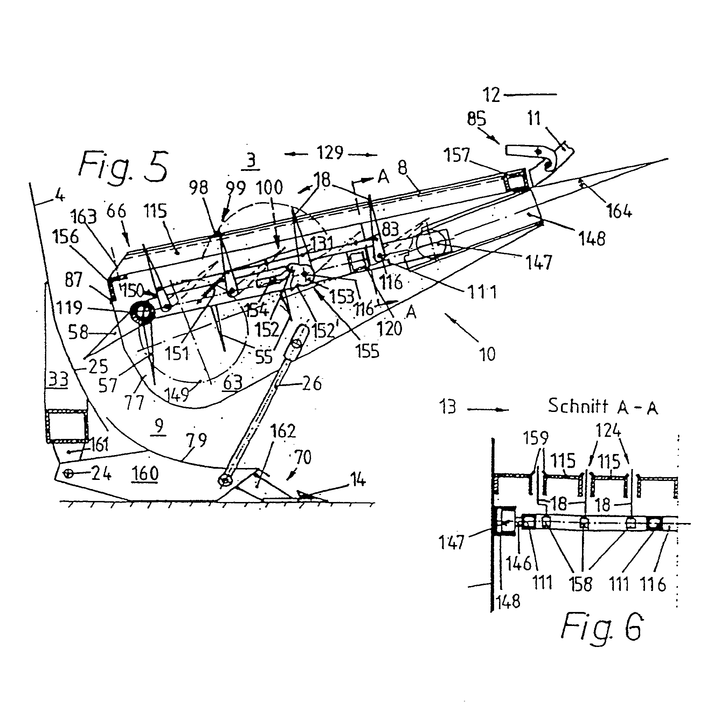

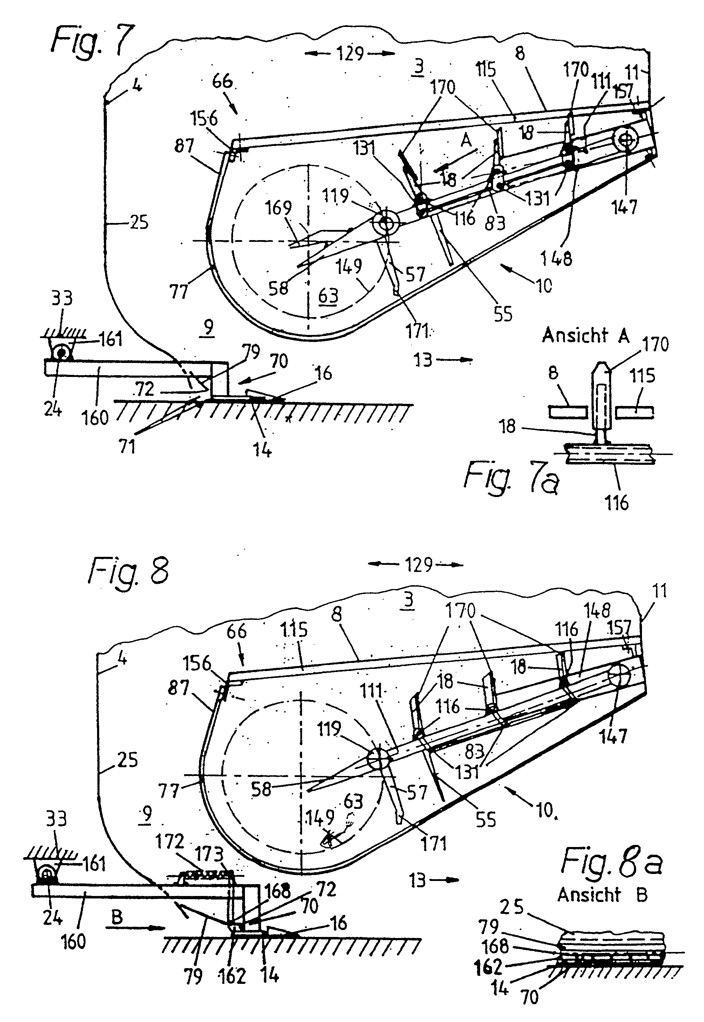

Eine besonders einfach gestaltete Ausführungsform ist in Fig. 5 und Fig. 6 wiedergegeben, bei der der untere Teil des Mähladegerätes 1 mit einem Kurbelstangenförderer 63 als Fördervorrichtung versehen ist.

Der Kurbelstangenförderer 63 weist vier über die Förderkanalbreite 21 verteilt angeordnete Kurbelstangen 111 auf, an deren förderkanalseitigen enden 150 ein Förderzinkenkamm 119 befestigt ist, der erste und zweite Förderzinken 57, 58 trägt, die zwischen die Abstreifer 77 hindurch in den Förderkanal 9 greifen und deren Anordnung und Ausrichtung, sowie Langenverhältnissen mit jener der Förderzinken 57, 58 des Schubkurbelförderers 62 ebenso übereinstimmt, wie deren Bahnen 95, 96.

Im Bereich ihres gegenüberliegenden Endes sind die Kurbelstangen 111 mit einem Querverbinder 120 versteift.

Die Beiden äußeren Kurbelstangen 111 sind an ihrem hin und her gehenden Ende im Bereich der Entladeöffnung 12 mit Achsstummeln 146 versehen, an denen Führungsrollen 147 gelagert sind, die in Führungsbahnen 148, aus U-profilen bestehend, laufen, die am Rahmen 33 befestigt sind.

Der Förderzinkenkamm 119 ist beiderseits an kurbeln, deren Bahn 149 in Fig. 5 angedeutet ist, angelenkt, die mit ihren Wellenzapfen im Rahmen 33 gelagert sind.

Die Kurbelstangen 111, die in den Totpunktlagen mit den Abstreifern 115 einen Winkel von 7,5 Graden einschließen, sind mit nach unten gerichteten Förderzinken 55 und mit nach oben gerichteten, verschwenkbaren Förderzinken 18 ausgestattet.Die nach unten gerichteten Förderzinken 55 des Kurbelstangenförderers 63 stimmen in Anordnung, Längenverhältnis zueinander und Ausrichtung mit jenen des Schubkurbelförderers 62 überein

Die Förderzinken 18 sind an Buchsen 158 befestigt, die auf Querwellen 116 fest angebracht sind, die ihrerseits in Abständen in den Kurbelstangen 111 gelagert sind und mit denen die nach oben gerichteten Förderzinken 18 zwischen einer abgesenkten Lage 100 während des Beladens des Laderaumes 3 und einer aufrechten Lage 99 während des Entladens, in der sie, über einen Teil ihrer Bahn 98, zwischen die Abstreifer 115 des fest angebrachten Laderaumbodens 8 in den Laderaum 3 hindurchgreifen, mittels eines Verstellgestänges 83 verschwenkbar sind.

Das Verstellgestänge 83 ist beim dargestellten Kurbelstangenförderer 63 im Bereich einer inneren Kurbelstange 111 angeordnet und von der Stirnwand 5 des Gerätes 1 her betätigbar - nicht dargestellt -. Die Förderzinken 10 sind über Anlenkungen 131 mit dem Verstellgestänge 83 unverstchieblich, verdrehbar verbunden.

Eine der Querwellen 116 ist mit einem Gesperre 155 versehen dessen Klinkenrad 153 auf der Querwelle 116 befestigt ist und das zwei Anschläge 152, 152' für eine Sperrklinke 154 eingearbeitet hat, die auf einer Kurbelstange 111 gelagert ist und die Querwelle 116 mit den Förderzinken 18 in einer der beiden Lagen 99 oder 100 feststellt. Eine Zugfeder 151, die zwischen Verstellgestänge 83 und Kurbelstange 111 angebracht ist, überführt die Förderzinken 18 bei Zntriegeln des Gesperres 155 in die aufrechte Lage 99.

An der Oberseite der Fördervorrichtung 10 zum Laderaum 3 ist der Kurbelstangenförderer 63 mit einem vorderen Rahmenquerträger 156 am förderkanalseitigen Ende 66 der Fördervorrichtung 10 und einen hinteren Rahmenquerträger 157 im Bereich der Entladeöffnung 12 versehen.

Der Laderaumboden 8 besteht aus in Längsrichtung 129 des Gerätes 1 verlaufenden Abstreifern 115, vom nach unten zu offenen U-Profilen, zwischen denen Längsspalten 124 für den Durchtritt der Förderzinken 18 frei gelassen sind.

Die Längsspalten 124 sind durch beiderseits an den Abstreifern 115 angeschweißte Abstreifbleche 159, die schräg nach oben auf den Längsspalt zu geneigt eingebaut sind, verengt, um ein gutes Abstreifen des Erntegutes zu erhalten.

Am fördrkanalseitigen Ende 66 der Fördervorrichtung 10 ist der Laderaumboden 8 über die Förderkanalbreite 21 ein geneigt angeordnetes Abdeckblech 163 eingesetzt, an das die Abstreifer 115 angeschweißt sind.

Der Förderkanal 9 ist mit einer geteilten unteren Förderkanalwand 25 versehen, bei der der untere Teil 79 über einen Arm 160 an einem Ausleger 161 des Rahmens 33 um die waagerechte Schwenkachse 24 verschwenkbar angelenkt ist.

Das Mähwerk 14 ist über Stützen 162 mit dem unteren Teil 79 der unteren Förderkanalwand 25 starr verbunden, der mit Gleitkufen auf dem Boden geführt dargestellt ist und zwischen dem und dem Mähwerk 14 ein Spalt 70 für das Abscheiden von Erde und Steinen vorgesehen ist.

Der untere Teil 79 der unteren Förderkanalwand 25 ist in der schon früher beim Schubstangenförderer 61 beschriebenen Weise mit dem Rahmen 33 des Gerätes 1 über eine Strebe 26 gelenkig verbunden.

Zur Vergrößerung des Laderaumes 3 ist das Gatter 11, das mit der Riegelvorrichtung 85 verschlossen ist, nach hinten hinausgezogen.

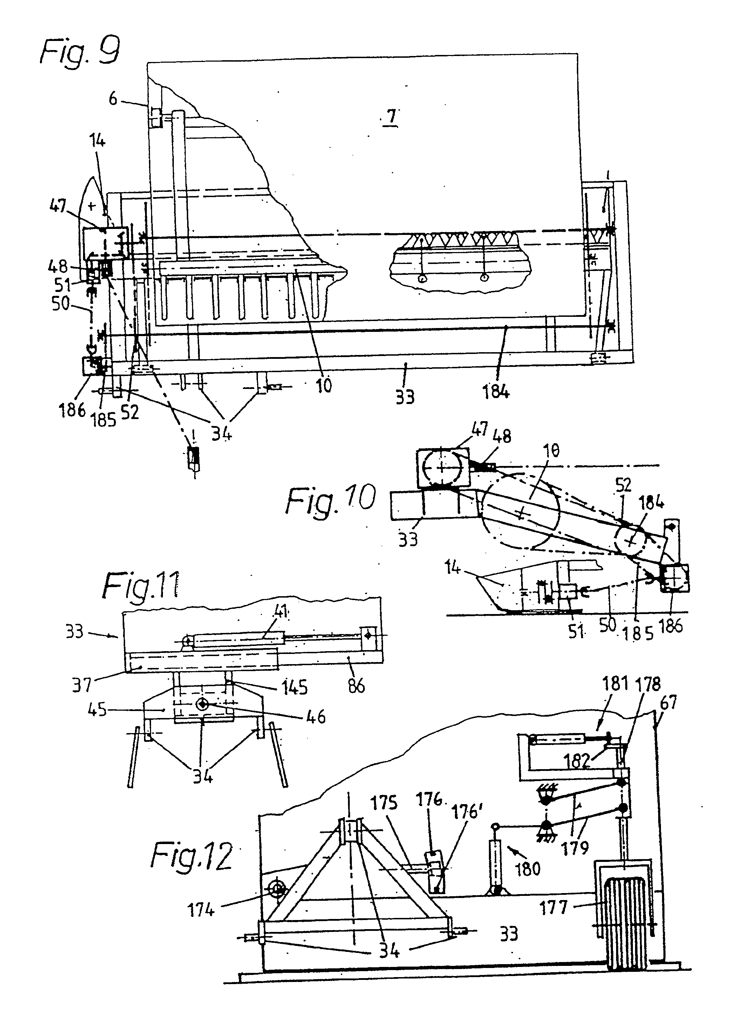

Zwei weitere Ausführungsbeispiele von Schubstangenförderern 63 sind in Fig. 7 und 8 dargestellt, die sich in ihrem Aufbau eng an die bei Fig. 5 und 6 beschriebene Ausführungsform anschließen.

Beide wiedergegebenen ausführungsformen weisen abweichend dazu drei Reihen von nach oben gerichteten, verschwenkbaren Förderzinken 18 auf, deren Verstellgestänge 83 an Verstellhebeln der Querwellen 116 angelenkt ist und die vorderen und die hinteren Rahmenquerträger 156 und 157 sind als L-Profile ausgebildet.

Bei diesen Ausführungsformen ist das Mähwerk so angeordnet, daß es mit den Mähwerkzeugen 16, in Förderrichtung gesehen, vor der tiefsten Stellung der Förderzinken, insbesonders der ersten, nach unten gerichteten Förderzinken 57 des Förderzinkenkammes 119 endet.

Diese Förderzinken 57 sind an den Spitzen mit in Förderrichtung des Förderzinkenkammes 119 abgebogenen Endstücken 171 versehen, mit denen das Ergreifen und Hochheben des Erntegutes verbessert wird.

Von den nach unten gerichteten Förderzinken 55 zum Hineinschieben des Erntegutes in den Förderkanal 9 ist nur eine Reihe vorgesehen.

Zwichen dem Balken des Mähwerkes 14 und dem, dem Mähwerk 14 zugewandten Rand 72 des unteren Teils 79 der unteren Förderkanalwand 25 ist der Spalt 70, dessen Breite 71 gering bemessen ist im Verhältnis zur länge der Halme des Erntegutes, über die Breite des Förderkanals 9 angeordnet, mit dem Rand 72 in die Tiefe des Förderkanals 9 hinein versetzt und wobei der Rand 72 oberhalb des Mähwerkbalkens über diesem oder an dessen hinteren Rand liegt.

Bei der in Fig. 7 wiedergegebenen Ausführungsform ist das Mähwerk zusammen mit dem unteren Teil 79 der unteren Förderkanalwand 25, die in Richtung auf das untere Ende zu abwärts gekrümmt ist, an dem Arm 160 befestigt, der um die horizontale Schwenkachse 24 am Ausleger 161 des Rahmens 33 höhenverschwenkbar angelenkt ist, so daß der untere Teil 79 mit seinem oberen Ende an der unteren Förderkanalwand 25 entlang geführt ist.

Die etwa waagerecht ausgerichteten, zweiten Förderzinken 58 des Förderzinkenkammes 119 des Kurbelstangenförderers 63 sind jeweils an ihrer Oberseite mit zusätzlichen Förderzinken 169 versehen, die schräg nach oben ausgerichtet sind, so daß dadurch die Förderung in den Laderaum 3 verbessert wird.

Von den nach oben gerichteten, verschwenkbaren Förderzinken 18 ist die erste von drei Reihen in Richtung auf das förderkanalseitige Ende 66 der Förderers 63 geneigt, wodurch die Bahn 98 dieser Förderzinken 18 in ihrer aufrechten Lage 99 zum Förderkanal 9 hin verschoben, wodurch das Entladen in diesem Bereich verbessert wird.

Zur Schonung des Erntegutes beim Entladen sind die Förderzinken 18, die mit einem Verstellgestänge 43 für den Eingriff in den Laderaum 3 hochgeschwenkt sind, jeweils mit einem verbreiterten Teil 170 versehen - Fig. 7a - dessen Fläche quer zur Förderrichtung 13 ausgerichtet ist und der entweder auf die Zinke aufgesetzt ist. oder mitsamt der Zinke aus T-Profil besteht, wie in der Fig. dargestellt.

Die Ausführungsform nach Fig. 8 und 8a weist als wesentlichen Unterschied zum vorigen eine andere Befestigung des Teils 79 der unteren Förderkanalwand 25 auf.

Der untere Teil 79 der ist um eine waagerechte, über die Breite des Förderkanals 9 verlaufende Schwenkachse 168 verschwenkbar auf den Stützen 162 gelagert, die über die Länge des Mähwerkbalkens in Abständen verteilt an diesem befestigt sind.

Der untere Teil 79 ist mit einem Federhebel 173 fest verbunden, an dem eine Feder 172 angelenkt ist, die sich andernends auf dem Arm 160 abstützt und den unteren Teil 79 gegen die untere Förderkanalwand 25 gepkrßt hält.

Fig. 8a zeigt diese Anordnung in einer Ansicht in Arbeitsrichtung 13.

In Fig. 2 und 10 ist eine Antriebsanordnung des Gerätes 1 dargestellt, bei der das Hauptgetriebe 47 mit einem Gelenkwellenanschluß für die Schleppergelenkwelle versehen ist, das außerhalb der Seitenwand 6 des Gerätes 1 am Rahmen 33 oben an der Seite, an der die Dreipunktanbauvorrichtung 34 angebracht ist, wodurch sich eine günstige Abwinkelung der Gelenkwelle ergibt.

Der Antrieb der Fördeivorrichtung 10 erfolgt beidseitig über Getriebe von einer Vorgelegewelle 184 aus, die über ein Zwischengetriebe 52 vom Hauptgetriebe 47 her angetrieben ist.

Das höhenbewegliche Mähwerk 14 wird von der Vorgelegewelle 184 her über ein Verlagerungsgetriebe 185 und ein Winkelgetriebe 186, das über eine Gelenkwelle 50 mit dem Mähwerkgetriebe 51 gekoppelt ist.

Damit sind die Getriebe nahezu volltändig auf einer Seite des Mähladegerätes 1 zusammengefaßt.

Mit Ausnahme des Hauptgetriebes 47 und des Winkelgetriebes 186 sind die Getriebe als Kettengetriebe ausgebildet.

Um beim Transport des Mähladegerätes 1 in gezogener Fahrweise hinter dem Schlepper, den Nachlauf des Gerätes zu verbessern, ist ein Anbaurahmen 45, der die Dreipunktanbauvorrichtung 34 trägt und mit dem Zwischenrahmmen 37 über eine lotrechte Achse 46 auf einer Konsole 145 seitlich verschwenkbar verbunden, der in der schon früher beschriebenen Weise auf dem Rahmen 33 verschiebbar gelagert ist.

In Fig. 12 ist Das Mähladegerät 1 MIT einer an der linken Seite angeordneten Dreipunktanbauvorrichtung 34 dargestellt, während auf der anderen, in bezug aud den Schlepper, nach außen versetzten Rahmenseite 67 ein einziges Stützrad 177 vorgesehen ist, das über einen Lenkhebel 182 von einer Lenkvorrichtung 181 in Abhängigkeit vom Lenkeinschlag des Schleppers gesteuert wird.

Die Dreipunktanbauvorrichtung 34 ist am Rahmen 33 um eine in Arbeitrichtung verlaufende, waagerechte Schwenkachse 174 angelenkt, die an dieser seitlich nach außen versetzt angeordnet ist, während nach innen zu ein Pendelarm 175 angebracht ist, der zwischen zwei, mit dem Rahmen 33 verbundenen Anschlägen 176 und 176' verschwenkbar geführt ist. An den Anschlägen 176, 176' sind Schaltmittel angebracht - nicht dargestellt - mit denen ein fernbedienbares Stellmittel 180, beispielsweise ein Hydraulikzylinder, gesteuert wird, das eine Höhenverstellvorrichtung 179 verstellt, an der die Lenkachse 178 des einzigen Stützrades 177 sich abstützt. Mit dieser Anordnung ist eine rasche und stufenlose Anpaßung des Mähladegerätes 1 und besonders des Mähwerkes 14 an den Boden möglich.

## Patentansprüche

1. Mähladegerät zum Betreiben mit einem landwirtschaftlichen Zugfahrzeug (2), mit einem an einem Rahmen (33) angeordneten Laderaum (3) mit im wesentlichen starren Wänden (4, 5, 6, 7), mit einem Mähwerk (14) am unteren Ende eines zum Laderaum ansteigenden Förderkanals (9) mit einer Beladevorrichtung zwecks Aufnahme des gemähten Erntegutes und Förderung in den Laderaum, mit einer dem Laderaumboden (8) zugeordneten, zum Entladen des Erntegutes durch eine mittels eines Gatters (11) verschließbare Entladeöffnung (12) dienenden Entladevorrichtung und mit wenigstens einer Antriebsvorrichtung zum Antreiben des Mähwerkes (14) sowie der Belade- und Entladevorrichtung vom Zugfahrzeug aus, wobei die Beladevorrichtung (9) erste und zweite Förderorgane umfaßt, von denen die ersten Förderorgane das Erntegut unmittelbar vom Mähwerk und die zweiten Förderorgane den Weitertransport des Erntegutes in den Laderaum bewirken, **dadurch gekennzeichnet, daß** die Be- und Entladevorrichtungen eine die ersten und zweiten Förderorgane umfaßende sowie dritte Förderorgane aufweisende Fördereinrichtung (10) bilden, die, in Arbeitsrichtung (13) gesehen, oberhalb des Mähwerkes (14) bis hinter die Mähwerkzeuge (16) hinausreichend und in Arbeitsrichtung ansteigend den Förderkanal (9) von seinem unteren Ende (65) aus bis zum Laderaum (3) und den Laderaumboden (8) im wesentlichen überstreicht.

2. Mähladegerät nach Anspruch 1, **dadurch gekennzeichnet, daß** die Fördervorrichtung (10) von einem Schubstangenförderer (61) gebildet ist und daß die ersten und zweiten Förderorgane (57, 58) winkelversetzt auf einer gemeinsamen Kurbel (92) des Schubstangenförderers angeordnet sind.

3. Mähladegerät nach Anspruch 1, **dadurch gekennzeichnet, daß** die Fördervorrichtung (10) von einem Schubkurbelgetriebe (62) gebildet ist, dessen Kurbelstange (19) die ersten und zweiten Förderorgane (57, 58) zugeordnet sind und dessen hin- und herbeweglich gelagertes Teil (17) die dritten Förderorgane (18) schwenkbar zugeordnet sind, die in ihrer Arbeitslage durch Öffnungen (31) in dem Boden (8) des Laderaumes hindurchragen.

4. Mähladegerät nach den Ansprüchen 1 und 2, **dadurch gekennzeichnet, daß** die Fördervorrichtung (10) ein Kurbelstangengetriebe (63, 149, 119, 111) bildet, dessen Koppelglied (111) den dritten Förderorganen (18) zugeordnet ist; vgl. Figur 8.

5. Mähladegerät nach den Ansprüchen 1 bis 4, **dadurch gekennzeichnet, daß** die Förderorgane (18, 54, 55, 57, 58, 59) als Förderzinken ausgebildet sind.

6. Mähladegerät nach den Ansprüchen 1 bis 5, **dadurch gekennzeichnet, daß** die zwischen einer Arbeits- und einer Leerhubstellung schwenkverstellbar auf dem als Zinkenträger (17) ausgebildeten Teil der Schubstange gelagerten, den Förderabschnitt des Laderaumbodens (8) des Laderaumes bildenden Förderorgane (18) gruppenweise eine ungleiche Länge aufweisen und im Bereich der Mündung des Förderkanals (9) am längsten sind.

7. Mähladegerät nach den Ansprüchen 1 bis 3, **dadurch gekennzeichnet, daß** die Kurbelstange (19) der Fördereinrichtung (10) weitere Förderorgane (20) aufweist, die entgegengesetzt zu den durch den Laderaumboden (8) greifenden Förderorganen (18) angeordnet sind.

**Claims**

1. Cutter loader for operation with an agricultural towing vehicle (2), with a loading chamber (3) arranged on a frame (33) and having essentially rigid walls (4, 5, 6, 7), with a cutting unit (14) at the lower end of a conveying channel (9) rising towards the loading chamber and having a loading device for the purpose of picking up the cut material to be harvested and conveying it into the loading chamber, with an unloading device associated with the base (8) of the loading chamber, serving for the unloading of the material to be harvested via an unloading aperture (12) which can be closed by means of a grille (11), and with at least one driving device for driving the cutting unit (14) and the loading and unloading device from the towing vehicle, the loading device (9) comprising first and second conveying elements, of which the first conveying elements transport the material to be harvested directly from the cutting unit and the second conveying elements transport the material to be harvested onwards into the loading chamber, characterised in that the loading and unloading devices form a conveying device (10) which comprises the first and second conveying elements, has third conveying elements and, as seen in the working direction (13), extending above the cutting unit (14) to behind the cutting tools (16) and, rising in the working direction, essentially covers the conveying channel (9), from its lower end (65) to the loading chamber (3), and the base (8) of the loading chamber.

2. Cutter loader according to Claim 1, characterised in that the conveying device (10) is formed by a sliding-bar conveyor (61) and in that the first and second conveying elements (57, 58) are arranged angularly offset on a common crank (92) of the sliding-bar conveyor.

3. Cutter loader according to Claim 1, characterised in that the conveying device (10) is formed by a slider-crank mechanism (62), with the connecting rod (19) of which the first and second conveying elements (57, 58) are associated and with that part (17) of which that is mounted in a manner which allows reciprocation the third conveying elements (18) are swivellably associated, said conveying elements protruding, in their working position, through apertures (31) in the base (8) of the loading chamber.

4. Cutter loader according to Claims 1 and 2, characterised in that the conveying device (10) forms a connecting-rod mechanism (63, 149, 119, 111), the coupling member (111) of which is associated with the third conveying elements (18); cf. Figure 8.

5. Cutter loader according to Claims 1 to 4, characterised in that the conveying elements (18, 54, 55, 57, 58, 59) are designed as conveying tines.

6. Cutter loader according to Claims 1 to 5, characterised in that groups of conveying elements (18), which conveying elements are mounted on that part of the sliding bar which is designed as tine holder (17) in such a way that they are swivellably adjustable between a working-stroke and an idle-stroke position and which form the conveying section of the base (8) of the loading chamber, have an unequal length and are longest in the region of the outlet of the conveying channel (9).

7. Cutter loader according to Claims 1 to 3, characterised in that the connecting rod (19) of the conveying device (10) has further conveying elements (20), which are arranged counter to the conveying elements (18) reaching through the base (8) of the loading chamber.

## Revendications

1. Engin de fauchage et de chargement, destiné à fonctionner avec un tracteur agricole (2), comportant un compartiment de chargement (3), placé sur un cadre (33) et muni de parois (4,5,6,7) essentiellement rigides, un dispositif de fauchage (14) à l'extrémité inférieure d'un canal de transport (9) montant jusqu'au compartiment de chargement, un dispositif de chargement pour recevoir la récolte fauchée et la transporter dans le compartiment de chargement, un dispositif de déchargement adapté au fond (8) du compartiment de chargement et servant au déchargement de la récolte au travers d'un orifice (12) de déchargement obturable au moyen d'une grille (11), et comportant au moins un dispositif moteur pour l'entraînement, à partir du véhicule tracteur, du dispositif de fauchage (14) ainsi que du dispositif de chargement et de déchargement, étant entendu que le dispositif de chargement (9) comprend des premiers et deuxièmes organes de transport, les premiers organes de transport agissant directement sur la récolte dès le dispositif de fauchage 14, et les deuxièmes organes de transport poursuivant le transport de la récolte vers le compartiment de chargement, caractérisé en ce que les dispositifs de chargement et de déchargement constituent un dispositif de transport (10) qui comprend les premier et deuxième organes de transport, ainsi que des troisièmes organes de transport, et qui, en regardant dans la direction de travail (13), passe au dessus du dispositif de fauchage (14), depuis derrière les outils de coupe (16), et suit essentiellement le parcours du canal de transport (9), en montant, dans la direction de travail, depuis l'extrémité inférieure du canal de transport (9) jusqu'au compartiment de chargement (3) et passe au dessus du fond (8) du compartiment de chargement.

2. Engin de fauchage et de chargement suivant la revendication 1, caractérisé en ce que le dispositif de transport (10) est formé d'un convoyeur à raclettes poussantes (61) et en ce que les premiers et deuxièmes organes de transport (57,58) sont disposés décalés angulairement sur une manivelle commune (92) du convoyeur à raclettes poussantes.

3. Engin de fauchage et de chargement suivant la revendication 1, caractérisé en ce que le dispositif de transport (10) est réalisé par un mécanisme (62) à manivelles de poussée, sur les biellettes-manivelles (19) duquel sont adaptés les premiers et deuxièmes organes de transport, et sur la partie (17) duquel, partie qui est montée de façon à pouvoir se déplacer dans les deux sens, les troisièmes organes de transport sont adaptés de façon à pouvoir basculer, ces troisièmes organes de transport dépassant, dans leur position de travail, par des ouvertures (31) dans le fond (8) du compartiment de chargement.

4. Engin de fauchage et de chargement suivant la revendication 1 et la revendication 2, caractérisé en ce que le dispositif de transport (10) constitue un mécanisme à manivelles de poussée (63, 149, 119, 111), dont l'organe d'accouplement (111) est adapté sur les troisièmes organes de transport (18); voir figure 8.

5. Engin de fauchage et de chargement suivant les revendications 1 à 4, caractérisé en ce que les organes de transport (18, 54, 55, 57, 58, 59) sont réalisés sous la forme de dents de transport.

6. Engin de fauchage et de chargement suivant les revendications 1 à 5, caractérisé en ce que les organes de transport (18), constituant la partie transport du fond (8) du compartiment de chargement, organes qui sont montés sur la pièce réalisée sous la forme de porte-dents (17), de façon à pouvoir basculer entre une position de travail et une position de marche à vide, sont disposés sous la forme de groupes et présentent des longueurs différentes, les plus longs étant dans la zone de l'orifice de sortie du canal de transport (9).

7. Engin de fauchage et de chargement suivant les revendications 1 à 3, caractérisé en ce que la biellette-manivelle (19) du dispositif de transport (10) est munie d'autres organes de transport (20) qui sont disposés à l'opposé des organes de transport (18) agissant au travers du fond (8) du compartiment de chargement.

Fig. 1

*Fig. 2*

Fig. 3

Fig. 4

Fig. 5

Schnitt A - A

Fig. 6

Fig. 7

Ansicht A

Fig. 7a

Fig. 8

Fig. 8a
Ansicht B

Fig. 9

Fig. 10

Fig. 11

Fig. 12